# EUROPÄISCHE PATENTSCHRIFT

(11) **EP 3 520 600 B1**
(45) Veröffentlichungstag und Bekanntmachung des Hinweises auf die Patenterteilung: **16.12.2020**
(21) Anmeldenummer: 19154248.9
(22) Anmeldetag: 29.01.2019
(51) Int. Cl.: A01D 78/10

(54) **VERFAHREN UND STEUERGERÄT ZUM BETREIBEN EINES KREISELSCHWADERS SOWIE KREISELSCHWADER**
ROTARY SWATHER AND METHOD AND CONTROL DEVICE FOR OPERATING A ROTARY SWATHER
PROCÉDÉ ET APPAREIL DE COMMANDE PERMETTANT DE FAIRE FONCTIONNER UNE ANDAINEUSE ROTATIVE AINSI QU'ANDAINEUSE ROTATIVE

(30) Priorität: 01.02.2018 DE 102018102310
(43) Veröffentlichungstag der Anmeldung: 07.08.2019
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-B1- 1 364 573
- DE-A1-102014 018 133

## Beschreibung

Die Erfindung betrifft ein Verfahren zum Betreiben eines Kreiselschwaders. Des Weiteren betrifft die Erfindung ein Steuergerät zum Betreiben eines Kreiselschwaders und einen Kreiselschwader.

Es sind Kreiselschwader mit mehreren Schwadkreiseln bekannt. Ein Kreiselschwader ist mittels eines Fahrwerks in seinem Betriebszustand auf einem zu bearbeitenden Boden bzw. Untergrund, auf welchem sich gemähtes und über den Kreiselschwader zu schwadendes Erntegut befindet, abgestützt. Jeder Schwadkreisel eines Kreiselschwaders umfasst einen umlaufenden, um eine Hochachse angetriebenen und mit gesteuerten Zinkenarmen und Rechzinken bestückten Rechkreisel. Typischerweise ist der Rechkreisel eines Schwadkreisels über ein Winkelgetriebe antreibbar. Im Allgemeinen sorgen die Laufräder des Fahrwerks des Kreiselschwaders, die sich unterhalb des oder jedes Schwadkreisels befinden, für die Bodenanpassung der Rechzinken. Ein Abstand zwischen den Rechzinken und dem Boden während des Rechvorgangs soll möglichst konstant sein.

Aus der EP 1 364 573 B1 ist ein Kreiselschwader mit mehreren Schwadkreiseln bekannt. Die Schwadkreisel bilden in Längsrichtung des Kreiselschwaders bzw. in Längsrichtung eines Längsholms eines Grundgestells des Kreiselschwaders gesehen mindestens zwei hintereinander angeordnete Schwadkreiselpaare aus. In der Betriebsstellung sind die Schwadkreisel derart zueinander eingestellt, dass ein Abstand zwischen den Schwadkreiseln eines ersten, vorderen Schwadkreiselpaars größer ist als der Abstand zwischen den Schwadkreiseln eines hinter dem ersten Schwadkreiselpaar positionierten zweiten, hinteren Schwadkreiselpaars, und dass zwischen den Schwadkreiseln des ersten Schwadkreiselpaars und den Schwadkreiseln des zweiten Schwadkreiselpaars in der Projektion eine definierte Überlappung oder Überdeckung besteht, um sämtliches in der Arbeitsbreite des Kreiselschwaders liegende Erntegut sicher zu einem Schwad zu vereinigen.

Aus der EP 1 364 573 B1 ist es weiterhin bekannt, in einem sogenannten Gleichrichtungs-Lenkmodus bei großer Arbeitsbreite und Kurvenfahrt einen kurveninneren Schwadkreisel näher nach innen in Richtung auf einen Tragrahmen zu ziehen, um dort die Überlappung bzw. Überdeckung zwischen den inneren Schwadkreiseln der Schwadkreiselpaare zu vergrößern und das Entstehen eines unbearbeiteten Streifens zu unterbinden.

Wird ein Kreiselschwader an einem Hang betrieben und fährt senkrecht zur Hangneigung, so besteht aufgrund der Hangabtriebskraft die Gefahr, dass der Kreiselschwader gegenüber einem Zugfahrzeug nach unten hangabwärts abdriftet, sodass sich dann ein Einschlagwinkel zwischen einer Längsmittelachse des Kreiselschwaders und einer Längsmittelachse des Zugfahrzeugs ausbildet. Hierdurch kann dann ein unbearbeiteter Streifen entstehen, in welchem Erntegut liegen bleibt und nicht zum Schwad vereinigt wird. Dies ist von Nachteil. Es besteht Bedarf daran, dies zu vermeiden.

Hiervon ausgehend liegt der vorliegenden Erfindung die Aufgabe zugrunde, ein neuartiges Verfahren und ein neuartiges Steuergerät zum Betreiben eines Kreiselschwaders sowie einen neuartigen Kreiselschwader zu schaffen.

Diese Aufgabe wird durch ein Verfahren nach Anspruch 1 gelöst. Abhängig von einem Einschlagwinkel des Kreiselschwaders und abhängig von einem Lenkwinkel eines den Kreiselschwader ziehenden Zugfahrzeugs wird ermittelt, ob der Kreiselschwader an einem Hang hangabwärts abdriftet. Dann, wenn ermittelt wird, dass der Kreiselschwader an einem Hang hangabwärts abdriftet, wird die definierte Überlappung oder Überdeckung der hangaufwärts positionierten Schwadkreisel erhöht. Mit der hier vorliegenden Erfindung wird vorgeschlagen, abhängig von dem Einschlagwinkel des Kreiselschwaders sowie abhängig von dem Lenkwinkel des Zugfahrzeugs zu ermitteln, ob der Kreiselschwader an einem Hang hangabwärts abdriftet. Ist dies der Fall, wird die definierte Überlappung oder Überdeckung der hangaufwärts positionierten Kreiselschwader erhöht, insbesondere dadurch, dass der hangaufwärts positionierte Schwadkreisel des ersten, vorderen Schwadkreiselpaars weiter nach innen in Richtung auf den Längsholm des Kreiselschwaders gezogen wird. Hierdurch wird die Gefahr vermieden, dass infolge eines Hangabdrifts des Kreiselschwaders ein unbearbeiteter Streifen auf einem zu bearbeitenden Untergrund verbleibt.

Nach einer vorteilhaften Weiterbildung wird dann, wenn ermittelt, dass der Kreiselschwader an einem Hang hangabwärts abdriftet, zusätzlich die definierte Überlappung oder Überdeckung der hangabwärts positionierten Schwadkreisel reduziert. Mit dieser Weiterbildung kann die Breite des vom Kreiselschwader bei der Bearbeitung erfassbaren Abschnitts des Untergrunds auch bei einer Hangabdrift unverändert gehalten werden.

Vorzugsweise ist ein Betrag, um den die definierte Überlappung oder Überdeckung der hangaufwärts positionierten Schwadkreisel erhöht wird, und/oder ein Betrag, um den die definierte Überlappung oder Überdeckung der hangabwärts positionierten Schwadkreisel reduziert wird, jeweils abhängig von dem Einschlagwinkel, vorzugsweise derart, dass die beiden Beträge in etwa gleich groß oder gleich groß sind. Dies erlaubt die Gewährleistung eines besonders vorteilhaften Arbeitsergebnisses bei Einsatz des Kreiselschwaders.

Das erfindungsgemäße Steuergerät zum Betreiben eines Kreiselschwaders ist in Anspruch 5 definiert.

Der erfindungsgemäße Kreiselschwader ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

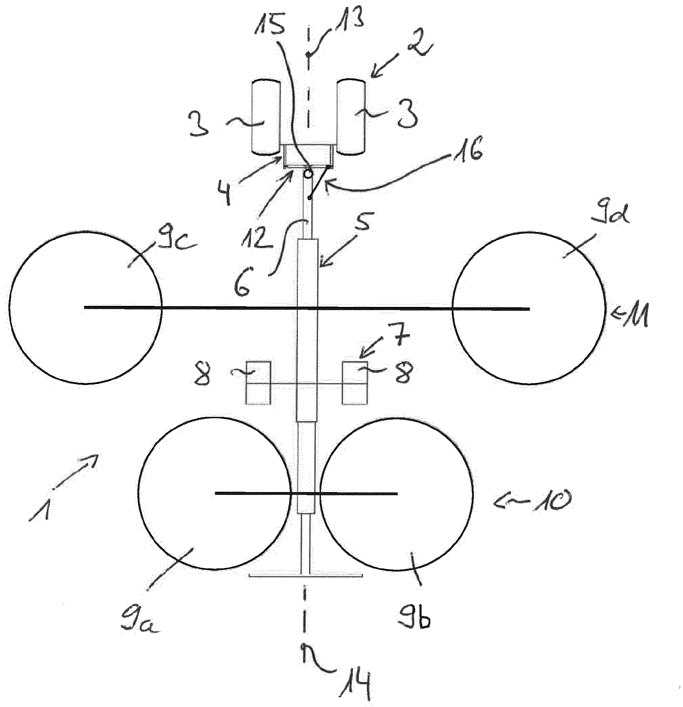

- Fig. 1: eine schematisierte Draufsicht auf einen Kreiselschwader zur Verdeutlichung der Erfindung.

Fig. 1 zeigt stark schematisiert eine Draufsicht auf einen Kreiselschwader 1 sowie auf ein Zugfahrzeug 2, an das der Kreiselschwader 1 gekoppelt ist. Vom Zugfahrzeug 2, bei welchem es sich insbesondere um einen Traktor bzw. Schlepper handelt, sind lediglich Hinterräder 3 sowie eine Kopplungseinrichtung 4 gezeigt, an die der Kreiselschwader 1 angekoppelt werden kann. Bei der in Fig. 1 gezeigten Kopplungseinrichtung 4 handelt es sich beispielhaft um ein Paar aus Unterlenkern.

Der Kreiselschwader 1 verfügt über ein Grundgestell 5, von dem ein Längsholm 6 gezeigt ist. Der Kreiselschwader 1 verfügt weiterhin über ein Fahrwerk 7. Das Fahrwerk 7 weist Laufräder 8 auf, wobei sich der Kreiselschwader 1 über die Laufräder 8 des Fahrwerks 7 auf einem zu bearbeitenden Untergrund abstützt.

Der Kreiselschwader 1 weist mehrere Schwadkreisel 9a, 9b, 9c und 9d auf. Die Schwadkreisel 9a, 9b, 9c und 9d bilden, in Längsrichtung des Längsholms 6 des Grundgestells 5 gesehen, mindestens zwei hintereinander angeordnete Schwadkreiselpaare 10, 11 aus. Der Kreiselschwader 1 der Fig. 1 verfügt über zwei Schwadkreiselpaare 10, 11, wobei das Schwadkreiselpaar 10 die Schwadkreisel 9a und 9b und das Schwadkreiselpaar 11 die Schwadkreisel 9c und 9d umfasst.

In der in Fig. 1 gezeigten Betriebsstellung des Kreiselschwaders 1 sind die Schwadkreisel 9a, 9b, 9c und 9d derart zueinander eingestellt bzw. ausgerichtet, dass ein Abstand zwischen den Schwadkreiseln 9c, 9d eines ersten, in Zugrichtung des Kreiselschwaders 1 gesehen vorderen Schwadkreiselpaars 11 größer ist als ein Abstand zwischen den Schwadkreiseln 9a und 9b des hinter dem ersten Schwadkreiselpaar 11 positionierten zweiten, in Zugrichtung hinteren Schwadkreiselpaars 10.

Ferner sind die Schwadkreisel 9a, 9b, 9c und 9d in der Betriebsstellung derart zueinander ausgerichtet, dass zwischen den Schwadkreiseln 9c und 9d des ersten Schwadkreiselpaars 11 und den Schwadkreiseln 9a und 9b des zweiten Schwadkreiselpaars 10 in der Projektion eine definierte Überlappung oder Überdeckung besteht, sodass sich im Betrieb über die Arbeitsbreite des Kreiselschwaders 1 gesehen kein unbearbeiteter Streifen ausbilden kann, sondern vielmehr sämtliches Erntegut, welches in der Arbeitsbreite des Kreiselschwaders 1 liegt, zu einem Schwad vereinigt wird. So weisen die Schwadkreisel 9a, 9c und die Schwadkreisel 9b, 9d in der Projektion in Längsrichtung eine definierte Überlappung oder Überdeckung auf.

Wie bereits ausgeführt, ist der Kreiselschwader 1 an ein Zugfahrzeug 2 gekoppelt. Das Zugfahrzeug 2 verfügt hierzu über die Kopplungseinrichtung 4, an die der Kreiselschwader 1 mit seiner Kopplungseinrichtung 12 angekoppelt ist.

Im Ausführungsbeispiel der Fig. 1 wird die Kopplungseinrichtung 4 des Zugfahrzeugs 2 von Unterlenkern bereitgestellt, bei der Kopplungseinrichtung 12 des Kreiselschwaders 1 handelt es sich um einen sogenannten Zwei-Punkt-Bock. Es sei darauf hingewiesen, dass diese Kopplungseinrichtungen 4, 12 auch unterschiedlich ausgeführt sein können.

Dann, wenn der Kreiselschwader 1 über seine Kopplungseinrichtung 12 an die Kopplungseinrichtung 4 des Zugfahrzeugs 2 angebunden ist, kann sich zwischen einer Längsmittelachse 13 des Zugfahrzeugs 2 und einer Längsmittelachse 14 des Kreiselschwaders 1 ein sogenannter Einschlagwinkel ausbilden.

Dieser Einschlagwinkel kann sich dadurch ausbilden, dass zwischen dem Längsträger 6 des Grundgestells 5 und der Kopplungseinrichtung 12 ein Drehgelenk 15 ausgebildet ist.

Ein sich ausbildender Einschlagwinkel kann mithilfe eines Einschlagwinkelsensors 16 messtechnisch erfasst werden, der im Ausführungsbeispiel der Fig. 1 einerseits am Längsholm 6 des Grundgestells 5 und andererseits an der Kopplungseinrichtung 12 des Kreiselschwaders 1 eingreift, wobei die Kopplungseinrichtung 12 des Kreiselschwaders 1 dann, wenn der Kreiselschwader 1 an das Zugfahrzeug 2 angebunden ist, fest mit der Kopplungseinrichtung 4 des Zugfahrzeugs 2 verbunden ist.

Im Sinne der hier vorliegenden Erfindung wird vorgeschlagen, dass abhängig von dem Einschlagwinkel des Kreiselschwaders 1 relativ zum Zugfahrzeug 2 sowie abhängig von einem Lenkwinkel des den Kreiselschwaders 1 ziehenden Zugfahrzeugs 2 ermittelt wird, ob der Kreiselschwader an einem Hang betrieben wird und hierbei hangabwärts abdriftet.

Ist nämlich der Lenkwinkel des Zugfahrzeugs 2 kleiner als ein erster Grenzwert und der Einschlagwinkel des Kreiselschwaders 1 relativ zum Zugfahrzeug 2 größer als ein zweiter Grenzwert, so kann hieraus geschlossen werden, dass der Kreiselschwader 1 vom Zugfahrzeug 2 im Hang gezogen wird, und zwar in einer Richtung senkrecht zur Hangneigung, und dass hierbei der Kreiselschwader 1 infolge einer Hangabtriebskraft hangabwärts im Hang abdriftet.

Dann, wenn ermittelt wird, dass der Kreiselschwader 1 im Betrieb an einem Hang hangabwärts abdriftet, wird die definierte Überlappung oder Überdeckung der hangaufwärts positionierten Schwadkreisel erhöht, und zwar vorzugsweise dadurch, dass der hangaufwärts positionierte Schwadkreisel des ersten, in Zugrichtung gesehen vorderen Schwadkreiselpaars 11 weiter nach innen bzw. hangabwärts gezogen wird.

Hierbei kann vorgesehen sein, dass zusätzlich die definierte Überlappung oder Überdeckung der hangabwärts positionierten Schwadkreisel reduziert wird, vorzugsweise dadurch, dass der hangabwärts positionierte Schwadkreisel des ersten, vorderen Schwadkreiselpaars 11 weiter vom Längsholm 6 wegbewegt bzw. weiter hangabwärts verlagert wird.

Der Betrag, um den die definierte Überlappung oder Überdeckung der hangaufwärts positionierten Schwadkreisel erhöht wird, und/oder der Betrag, um den die definierte Überlappung oder Überdeckung der hangabwärts positionierten Schwadkreisel reduziert wird, wird vorzugsweise abhängig von dem messtechnisch erfassten Einschlagwinkel bestimmt, wobei diese Beträge nach einer besonders vorteilhaften Weiterbildung gleich oder in etwa gleich sind.

Die Erfindung betrifft weiterhin ein Steuergerät zum Betreiben eines Kreiselschwaders 1. Dieses Steuergerät ist in Fig. 1 nicht gezeigt.

Das Steuergerät des Kreiselschwaders 1 ermittelt abhängig von dem Einschlagwinkel des Kreiselschwaders 1, der vorzugsweise vom Einschlagwinkelsensor 16 messtechnisch erfasst wird, und abhängig von einem Lenkwinkel des den Kreiselschwader ziehenden Zugfahrzeugs 2, ob der Kreiselschwader an einem Hang hangabwärts abdriftet.

Hierzu empfängt das Steuergerät des Kreiselschwaders 1 vom Einschlagwinkelsensor 16 den Einschlagwinkel und vom Fahrzeug den Lenkwinkel. Ist der Lenkwinkel kleiner als ein erster Grenzwert und der Einschlagwinkel größer als ein zweiter Grenzwert, so schließt das Steuergerät darauf, dass der Kreiselschwader an einem Hang betrieben wird und hierbei hangabwärts abdriftet.

In diesem Fall erhöht dann das Steuergerät die Überlappung oder Überdeckung der hangaufwärts positionierten Schwadkreisel, vorzugsweise dadurch, dass der Schwadkreisel des vorderen Schwadkreiselpaars 11 derart angesteuert wird, dass derselbe in Richtung auf den Längsholm 6 weiter nach innen gezogen wird. Zusätzlich kann auch die Überlappung oder Überdeckung der hangabwärts positionierten Schwadkreisel reduziert werden, vorzugsweise dadurch, dass das Steuergerät den Schwadkreisel des vorderen Schwadkreiselpaars 11, der hangabwärts positioniert ist, derart ansteuert, dass derselbe weiter vom Längsholm 6 des Grundgestells 5 wegbewegt wird.

Die Erfindung betrifft weiterhin einen Kreiselschwader 1. Der Kreiselschwader 1 verfügt über die die Kreiselschwaderpaare 10, 11 bildenden Schwadkreisel 9a, 9b, 9c und 9d sowie über das oben beschriebene Steuergerät. Ferner verfügt der Kreiselschwader 1 über eine Einrichtung zur Erfassung eines Einschlagwinkels des Kreiselschwaders 1 relativ zum Zugfahrzeug 2, vorzugsweise über den in Fig. 1 gezeigten Einschlagwinkelsensor 16.

Mit der Erfindung kann vermieden werden, dass dann, wenn ein Kreiselschwader 1 im Hang betrieben wird, nämlich senkrecht zu einer Hangneigung von einem Zugfahrzeug 2 gezogen wird, und infolge seines Gewichts und der Hangabtriebskraft im Hang hangabwärts abdriftet, sich ein nicht bearbeiteter Streifen ausbildet. So kann stets ein gutes Schwadergebnis gewährleistet werden. Es bleibt kein Erntegut liegen. Ferner wird der Fahrer des Zugfahrzeugs entlastet bzw. unterstützt.

### Bezugszeichenliste

- 1: Kreiselschwader
- 2: Zugfahrzeug
- 3: Hinterräder
- 4: Kopplungseinrichtung
- 5: Grundgestell
- 6: Längsholm
- 7: Fahrwerk
- 8: Laufrad
- 9a: Schwad kreisel
- 9b: Schwad kreisel
- 9c: Schwad kreisel
- 9d: Schwad kreisel
- 10: Schwadkreiselpaar
- 11: Schwadkreiselpaar
- 12: Kopplungseinrichtung
- 13: Längsmittelachse
- 14: Längsmittelachse
- 15: Drehgelenk
- 16: Einschlagwinkelsensor

## Patentansprüche

1. Verfahren zum Betreiben eines Kreiselschwaders (1), wobei der Kreiselschwader (1) zumindest folgende Baugruppen aufweist:
ein Grundgestell (5), welches einen Längsholm (6) aufweist,
ein Fahrwerk (7), welches Laufräder (8) aufweist, wobei sich der Kreiselschwader (1) über die Laufräder (8) des Fahrwerks (7) auf einem zu bearbeitenden Untergrund abstützt,
mehrere Schwadkreisel (9a, 9b, 9c, 9d), die in Längsrichtung des Längsholms (6) gesehen mindestens zwei hintereinander angeordnete Schwadkreiselpaare (10, 11) bilden, wobei in einer Betriebsstellung die Schwadkreisel (9a, 9b, 9c, 9d) derart zueinander eingestellt werden, dass ein Abstand zwischen den Schwadkreiseln (9c, 9d) eines ersten Schwadkreiselpaars (11) größer ist als der Abstand zwischen den Schwadkreiseln (9a, 9b,) eines hinter dem ersten Schwadkreiselpaar (11) positionierten zweiten Schwadkreiselpaars (10), und dass zwischen den Schwadkreiseln des ersten Schwadkreiselpaar (11) und den Schwadkreiseln des zweiten Schwadkreiselpaars (12) in der Projektion eine definierte Überlappung oder Überdeckung besteht,
**dadurch gekennzeichnet, dass**
abhängig von einem Einschlagwinkel des Kreiselschwaders (1) und abhängig von einem Lenkwinkel eines den Kreiselschwader (1) ziehenden Zugfahrzeugs (2) ermittelt wird, ob der Kreiselschwader (1) an einem Hang hangabwärts abdriftet,
dann, wenn ermittelt wird, dass der Kreiselschwader an einem Hang hangabwärts abdriftet, die definierte Überlappung oder Überdeckung der hangaufwärts positionierten Schwadkreisel (9a, 9b, 9c, 9d) erhöht wird.

2. Verfahren nach Anspruch 1, **dadurch gekennzeichnet, dass** ein Betrag, um den die definierte Überlappung oder Überdeckung der hangaufwärts positionierten Schwadkreisel (9a, 9b, 9c, 9d) erhöht wird, abhängig von dem Einschlagwinkel ist.

3. Verfahren nach Anspruch 1 oder 2, **dadurch gekennzeichnet, dass** dann, wenn ermittelt wird, dass der Kreiselschwader (1) an einem Hang hangabwärts abdriftet, zusätzlich die definierte Überlappung oder Überdeckung der hangabwärts positionierten Schwadkreisel (9a, 9b, 9c, 9d) reduziert wird.

4. Verfahren nach Anspruch 3, **dadurch gekennzeichnet, dass** ein Betrag, um den die definierte Überlappung oder Überdeckung der hangabwärts positionierten Schwadkreisel (9a, 9b, 9c, 9d) reduziert wird, abhängig von dem Einschlagwinkel ist.

5. Steuergerät eines Kreiselschwaders, **dadurch gekennzeichnet, dass**
das Steuergerät abhängig von einem Einschlagwinkel des Kreiselschwaders (1) und abhängig von einem Lenkwinkel eines den Kreiselschwader ziehenden Zugfahrzeugs (2) ermittelt, ob der Kreiselschwader (2) an einem Hang hangabwärts abdriftet,
das Steuergerät dann, wenn dasselbe ermittelt, dass der Kreiselschwader (1) an einem Hang hangabwärts abdriftet, eine definierte Überlappung oder Überdeckung von hangaufwärts positionierten Schwadkreiseln (9a, 9b, 9c, 9d) erhöht.

6. Steuergerät nach Anspruch 5, **dadurch gekennzeichnet, dass** das Steuergerät einen Betrag, um den die definierte Überlappung oder Überdeckung der hangaufwärts positionierten Schwadkreisel (9a, 9b, 9c, 9d) erhöht wird, abhängig von dem Einschlagwinkel bestimmt.

7. Steuergerät nach Anspruch 5 oder 6, **dadurch gekennzeichnet, dass** das Steuergerät dann, wenn dasselbe ermittelt, dass der Kreiselschwader (1) an einem Hang hangabwärts abdriftet, zusätzlich die definierte Überlappung oder Überdeckung der hangabwärts positionierten Schwadkreisel (9a, 9b, 9c, 9d) reduziert.

8. Steuergerät nach Anspruch 7, **dadurch gekennzeichnet, dass** das Steuergerät einen Betrag, um den die definierte Überlappung oder Überdeckung der hangabwärts positionierten Schwadkreisel (9a, 9b, 9c, 9d) reduziert wird, abhängig von dem Einschlagwinkel bestimmt.

9. Kreiselschwader (1), der zumindest folgende Baugruppen aufweist:
ein Grundgestell (5), welches einen Längsholm (6) aufweist,
ein Fahrwerk (7), welches Laufräder (8) aufweist, wobei sich der Kreiselschwader (1) über die Laufräder (8) des Fahrwerks (7) auf einem zu bearbeitenden Untergrund abstützt,
mehrere Schwadkreisel (9a, 9b, 9c, 9d), die in Längsrichtung des Längsholms (6) gesehen mindestens zwei hintereinander angeordnete Schwadkreiselpaare (10, 11) bilden, wobei in einer Betriebsstellung die Schwadkreisel (9a, 9b, 9c, 9d) derart zueinander einstellbar sind, dass ein Abstand zwischen den Schwadkreiseln (9c, 9d) eines ersten Schwadkreiselpaars (11) größer ist als der Abstand zwischen den Schwadkreiseln (9a, 9b,) eines hinter dem ersten Schwadkreiselpaar (11) positionierten zweiten Schwadkreiselpaars (10), und dass zwischen den Schwadkreiseln des ersten Schwadkreiselpaar (11) und den Schwadkreiseln des zweiten Schwadkreiselpaars (10) in der Projektion eine definierte Überlappung oder Überdeckung besteht,
**gekennzeichnet durch**
ein Steuergerät nach einem der Anspruche 5 bis 8.

10. Kreiselschwader nach Anspruch 9, **gekennzeichnet durch** einen Einschlagwinkelsensor (16), welcher den Einschlagwinkel des Kreiselschwaders messtechnisch erfasst.

## Claims

1. Method for operating a rotary rake (1), wherein the rotary rake (1) has at least the following subassemblies:
a basic frame (5) that has a longitudinal beam (6),
a chassis (7) that has running wheels (8), wherein the rotary rake (1) is supported on a substrate to be treated via the running wheels (8) of the chassis (7),
a plurality of rake rotors (9a, 9b, 9c, 9d) that form at least two rake rotor pairs (10, 11) arranged one behind the other as seen in the longitudinal direction of the longitudinal beam (6), wherein, in an operating position, the rake rotors (9a, 9b, 9c, 9d) are set with respect to one another such that a spacing between the rake rotors (9c, 9d) of a first rake rotor pair (11) is greater than the spacing between the rake rotors (9a, 9b) of a second rake rotor pair (10) positioned behind the first rake rotor pair (11), and such that, between the rake rotors of the first rake rotor pair (11) and the rake rotors of the second rake rotor pair (12), there is a defined overlap or superimposition in projection,
**characterized in that**,
depending on a lock angle of the rotary rake (1) and depending on a steering angle of a towing vehicle (2) towing the rotary rake (1), it is determined whether the rotary rake (1) is drifting downhill on a slope,
when it is determined that the rotary rake is drifting downhill on a slope, the defined overlap or superimposition of the rake rotors (9a, 9b, 9c, 9d) positioned uphill is increased.

2. Method according to Claim 1, **characterized in that** an amount by which the defined overlap or superimposition of the rake rotors (9a, 9b, 9c, 9d) positioned uphill is increased is dependent on the lock angle.

3. Method according to Claim 1 or 2, **characterized in that** when it is determined that the rotary rake (1) is drifting downhill on a slope, the defined overlap or superimposition of the rake rotors (9a, 9b, 9c, 9d) positioned downhill is additionally reduced.

4. Method according to Claim 3, **characterized in that** an amount by which the defined overlap or superimposition of the rake rotors (9a, 9b, 9c, 9d) positioned downhill is reduced is dependent on the lock angle.

5. Control device for a rotary rake, **characterized in that**
the control device determines, depending on a lock angle of the rotary rake (1) and depending on a steering angle of a towing vehicle (2) towing the rotary rake, whether the rotary rake (2) is drifting downhill on a slope,
when the control device determines that the rotary rake (1) is drifting downhill on a slope, said control device increases a defined overlap or superimposition of rake rotors (9a, 9b, 9c, 9d) positioned uphill.

6. Control device according to Claim 5, **characterized in that** the control device determines an amount by which the defined overlap or superimposition of the rake rotors (9a, 9b, 9c, 9d) positioned uphill is increased, depending on the lock angle.

7. Control device according to Claim 5 or 6, **characterized in that** when the control device determines that the rotary rake (1) is drifting downhill on a slope, said control device additionally reduces the defined overlap or superimposition of the rake rotors (9a, 9b, 9c, 9d) positioned downhill.

8. Control device according to Claim 7, **characterized in that** the control device determines an amount by which the defined overlap or superimposition of the rake rotors (9a, 9b, 9c, 9d) positioned downhill is reduced, depending on the lock angle.

9. Rotary rake (1), which has at least the following subassemblies:
a basic frame (5) that has a longitudinal beam (6),
a chassis (7) that has running wheels (8), wherein the rotary rake (1) is supported on a substrate to be treated via the running wheels (8) of the chassis (7),
a plurality of rake rotors (9a, 9b, 9c, 9d) that form at least two rake rotor pairs (10, 11) arranged one behind the other as seen in the longitudinal direction of the longitudinal beam (6), wherein, in an operating position, the rake rotors (9a, 9b, 9c, 9d) can be set with respect to one another such that a spacing between the rake rotors (9c, 9d) of a first rake rotor pair (11) is greater than the spacing between the rake rotors (9a, 9b) of a second rake rotor pair (10) positioned behind the first rake rotor pair (11), and such that, between the rake rotors of the first rake rotor pair (11) and the rake rotors of the second rake rotor pair (10), there is a defined overlap or superimposition in projection,
**characterized by**
a control device according to one of Claims 5 to 8.

10. Rotary rake according to Claim 9, **characterized by** a lock angle sensor (16) that senses the lock angle of the rotary rake by measurement.

## Revendications

1. Procédé pour faire fonctionner un andaineur rotatif (1), l'andaineur rotatif (1) comprenant au moins les sous-ensembles suivants :
un châssis de base (5), lequel possède un longeron (6), un mécanisme roulant (7), lequel possède des roues de roulement (8), l'andaineur rotatif (1) prenant appui sur un support à traiter par le biais des roues de roulement (8) du mécanisme roulant (7),
plusieurs rotors d'andainage (9a, 9b, 9c, 9d) qui, vus dans le sens longitudinal du longeron (6), forment au moins deux paires de rotors d'andainage (10, 11) disposées l'une derrière l'autre, les rotors d'andainage (9a, 9b, 9c, 9d) dans une position opérationnelle étant réglés les uns par rapport aux autres de telle sorte qu'un écart entre les rotors d'andainage (9c, 9d) d'une première paire de rotors d'andainage (11) est supérieur à l'écart entre les rotors d'andainage (9a, 9b) d'une deuxième paire de rotors d'andainage (10) positionnée derrière la première paire de rotors d'andainage (11), et qu'il existe, dans la projection, un chevauchement ou un recouvrement défini entre les rotors d'andainage de la première paire de rotors d'andainage (11) et les rotors d'andainage de la deuxième paire de rotors d'andainage (12),
**caractérisé en ce que**
en fonction d'un angle de braquage de l'andaineur rotatif (1) et en fonction d'un angle de direction d'un véhicule tracteur (2) qui tracte l'andaineur rotatif (1), il est déterminé si l'andaineur rotatif (1) sur un versant de pente dérive vers le bas du versant de pente,
s'il est déterminé que l'andaineur rotatif sur un versant de pente dérive vers le bas du versant de pente, le chevauchement ou le recouvrement défini des rotors d'andainage (9a, 9b, 9c, 9d) positionnés en amont du versant de pente est alors augmenté.

2. Procédé selon la revendication 1, **caractérisé en ce qu'**une amplitude de laquelle le chevauchement ou le recouvrement défini des rotors d'andainage (9a, 9b, 9c, 9d) positionnés en amont du versant de pente est augmentée dépend de l'angle de braquage.

3. Procédé selon la revendication 1 ou 2, **caractérisé en ce que** lorsqu'il est déterminé que l'andaineur rotatif (1) sur un versant de pente dérive vers le bas du versant de pente, le chevauchement ou le recouvrement défini des rotors d'andainage (9a, 9b, 9c, 9d) positionnés en aval du versant de pente est en plus réduit.

4. Procédé selon la revendication 3, **caractérisé en ce qu'**une amplitude de laquelle le chevauchement ou le recouvrement défini des rotors d'andainage (9a, 9b, 9c, 9d) positionnés en amont du versant de pente est réduite dépend de l'angle de braquage.

5. Contrôleur d'un andaineur rotatif, **caractérisé en ce que**
le contrôleur détermine, en fonction d'un angle de braquage de l'andaineur rotatif (1) et en fonction d'un angle de direction d'un véhicule tracteur (2) qui tracte l'andaineur rotatif, si l'andaineur rotatif (2) sur un versant de pente dérive vers le bas du versant de pente, si le contrôleur détermine que l'andaineur rotatif (1) sur un versant de pente dérive vers le bas du versant de pente, ledit contrôleur augmente alors un chevauchement ou un recouvrement défini des rotors d'andainage (9a, 9b, 9c, 9d) positionnés en amont du versant de pente.

6. Contrôleur selon la revendication 5, **caractérisé en ce que** le contrôleur spécifie en fonction de l'angle de braquage une amplitude de laquelle le chevauchement ou le recouvrement défini des rotors d'andainage (9a, 9b, 9c, 9d) positionnés en amont du versant de pente est augmentée.

7. Contrôleur selon la revendication 5 ou 6, **caractérisé en ce que** lorsque le contrôleur détermine que l'andaineur rotatif (1) sur un versant de pente dérive vers le bas du versant de pente, ledit contrôleur réduit en plus le chevauchement ou le recouvrement défini des rotors d'andainage (9a, 9b, 9c, 9d) positionnés en aval du versant de pente.

8. Contrôleur selon la revendication 7, **caractérisé en ce que** le contrôleur spécifie, en fonction de l'angle de braquage, une amplitude de laquelle le chevauchement ou le recouvrement défini des rotors d'andainage (9a, 9b, 9c, 9d) positionnés en amont du versant de pente est réduite.

9. Andaineur rotatif (1), comprenant au moins les sous-ensembles suivants :
un châssis de base (5), lequel possède un longeron (6),
un mécanisme roulant (7), lequel possède des roues de roulement (8), l'andaineur rotatif (1) prenant appui sur un support à traiter par le biais des roues de roulement (8) du mécanisme roulant (7),
plusieurs rotors d'andainage (9a, 9b, 9c, 9d) qui, vus dans le sens longitudinal du longeron (6), forment au moins deux paires de rotors d'andainage (10, 11) disposées l'une derrière l'autre, les rotors d'andainage (9a, 9b, 9c, 9d) dans une position opérationnelle pouvant être réglés les uns par rapport aux autres de telle sorte qu'un écart entre les rotors d'andainage (9c, 9d) d'une première paire de rotors d'andainage (11) est supérieur à l'écart entre les rotors d'andainage (9a, 9b) d'une deuxième paire de rotors d'andainage (10) positionnée derrière la première paire de rotors d'andainage (11), et qu'il existe, dans la projection, un chevauchement ou un recouvrement défini entre les rotors d'andainage de la première paire de rotors d'andainage (11) et les rotors d'andainage de la deuxième paire de rotors d'andainage (10),
**caractérisé par**
un contrôleur selon l'une des revendications 5 à 8.

10. Andaineur rotatif selon la revendication 9, **caractérisé par** un capteur d'angle de braquage (16) qui acquiert par technique de mesure l'angle de braquage de l'andaineur rotatif.
